# EUROPEAN PATENT SPECIFICATION

(11) **EP 1 886 872 B1**
(45) Date of publication and mention of the grant of the patent: **25.11.2009**
(21) Application number: 06016383.9
(22) Date of filing: 05.08.2006
(51) Int. Cl.: B60Q 1/44

(54) **Segmented brake light**
Unterteilte Bremsleuchte
Feu de freinage segmenté

(43) Date of publication of application: 13.02.2008
(60) Divisional application: 07009887.6
(73) Proprietor: Tsai, Chou-Pai, Chiayi Hsien, Taiwan (TW)
(72) Inventor: Tsai, Chou-Pai, Chiayi Hsien, Taiwan (TW)
(74) Representative: Hauck Patent- und Rechtsanwälte

(56) References cited:
- WO-A-01/92061
- AU-A4- 2006 100 673
- FR-A- 2 831 498
- GB-A- 2 328 092
- GB-A- 2 344 003
- US-A- 5 148 147
- US-A- 5 150 098
- US-A- 5 594 415

## Description

### 1. Field of the Invention

The present invention relates to a segmented brake light, and more particularly to a brake light composed of multiple light modules that are selectively and progressively activated according to different pressure a driver stepped on the brake pedal.

### 2. Description of Related Art

A top-installed rear brake light near the rear windshield in a vehicle is usually started when the driver is stepping on a brake pedal to warn other people behind the vehicle to avoid any collision.

How the top-installed rear brake light works is often determined by the sensitivity of the brake light and a driver's behaviors. A high sensitivity light can be easily activated with a small pressure when the driver slightly steps on the brake pedal. However, the driver may just move the feet to the brake pedal as a preparatory action for braking, not mean to brake the car. Comparing to the high sensitive operations, a low sensitively brake light requires a deep stepping or high pressure on the brake pedal. For other drivers behind the car, they may have no sufficient time in emergency brakes. The complete turn-off and turn-on operations of a conventional light are unable to provide other drivers with a good pre-warning effect.

However, to produce a top-installed rear brake light that can display multiple effects according to different statuses, some complex factors such as modifying original circuits in the vehicle may discourage consumers from equipping the vehicle with such a brake light.

From GB 2 328 092 A a pressure sensing device has become known. The pressure sensing device comprises a plunger coupled to a brake pedal, a movable contact in the plunger for engagement with different ones of multiple fixed contacts, a control unit connected to the fixed contacts, and multiple visual display units connected to the control unit. Another document, US 5,510,098 A, discloses a brake signaling system. The brake signaling system comprises a dependable sequential pressure monitoring brake light display to alert others of the relative frequency and amount of braking forces applied during braking of the vehicle.

The present invention provides a new segmented brake light to overcome the foregoing drawback.

The objective of the present invention is to provide a segmented brake light that can selectively activate one or multiple light modules according to different pressure a driver steps on a brake pedal thus showing other vehicles with more sufficient braking information without changing original circuits in the vehicle.

The segmented brake light has a detecting module mounted in a vehicle near a brake pedal, a driving module connected to the detecting module and multiple light modules controlled by the driving module. The detecting module detects pressure on a brake pedal of the vehicle to produce a detecting signal based on the detected pressure. The driving module produces a driving signal according to the detecting signal from the detecting module. The multiple light modules connected to the driving module are selectively started according to the driving signal.

The segmented brake light according to the invention comprises the technical features of claim 1.

Other objectives, advantages and novel features of the invention will become more apparent from the following detailed description when taken in conjunction with the accompanying drawings.
In the drawings:
Fig. 1 is a schematic of a detecting module in accordance with the present invention being mounted near a brake pedal;
Fig. 2 is a front cross sectional view of the detecting module of Fig. 1 in accordance with the present invention;
Fig. 3 is a side cross sectional view of the detecting module of Fig. 1 in accordance with the present invention;
Fig. 4 is an operational cross sectional view of the detecting module;
Fig. 5 is a circuit diagram of a voltage switching circuit according to the present invention;
Fig. 6 is a circuit diagram of a driving module according to the present invention;
Figs. 7 to 9 show different examples of the arrangements of the light modules in accordance with the present invention.

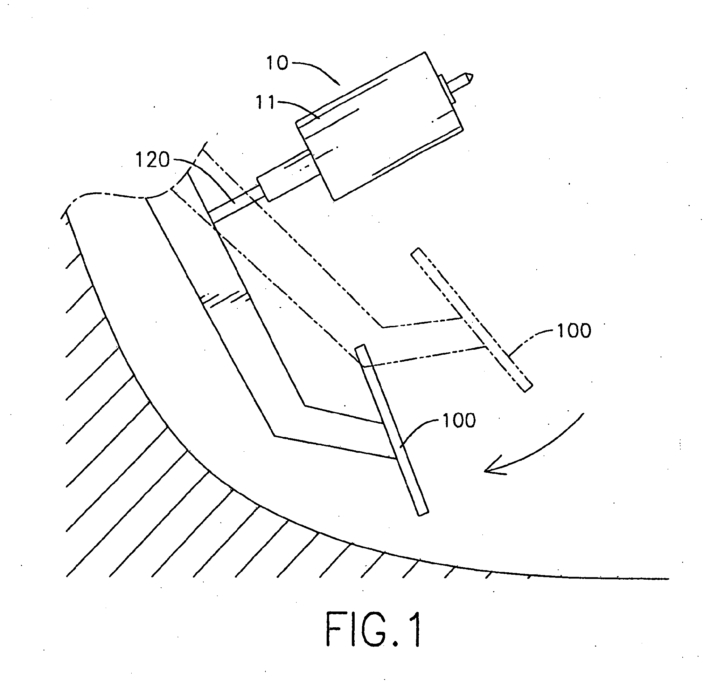

A segmented brake light in accordance with the present invention is composed of a detecting module, a driving module and multiple light modules. With reference to Fig. 1, the detecting module (10) is mounted at a position near a brake pedal (100) in a vehicle to produce detecting signals in response to different pressures on the brake pedal (100). In this embodiment, the detecting module (10) connects to a power source and produces voltage signals of different levels output to the driving module when the brake light is pressed.

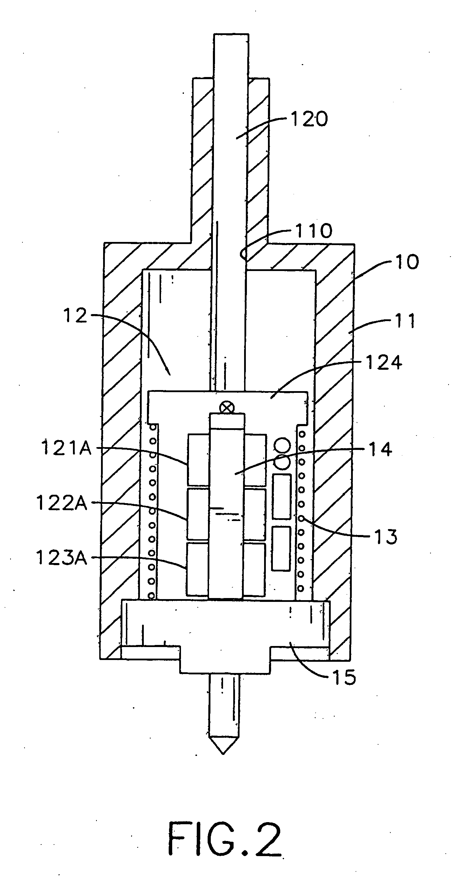

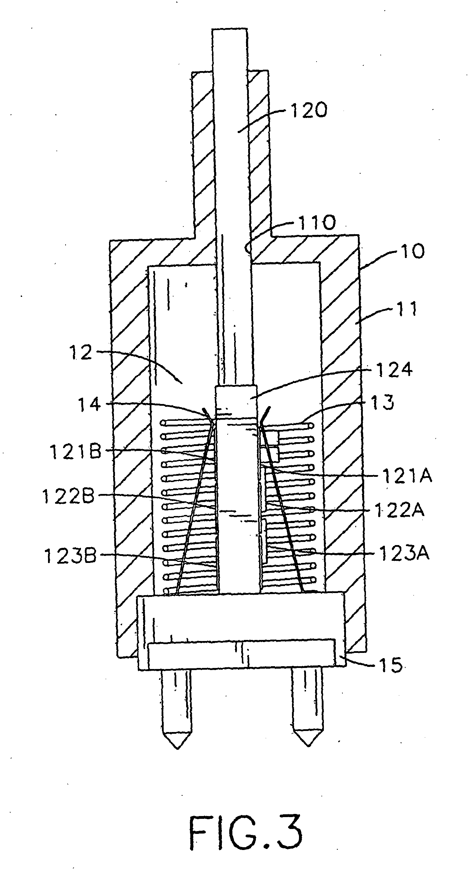

With reference to Figs. 2 and 3, the detecting module (10) comprises a hollow tube (11), an actuator assembly (12) in the tube (11), an elastic element (13), two resilient contacts (14) and a stopper (15).

The hollow tube (11) has an open end and a bottom end with a hole (110) defined through the bottom end, wherein the stopper (15) is filled in the open end.

The actuator assembly (12) in the hollow tube (11) includes a circuit board (124), a shaft (120) with one end jointed to the circuit board (124) and extending through the hole (110) of the hollow tube (11). Another end of the shaft (120) abuts against the brake pedal (100) in such a way that the shaft (120) can extend out of the hollow tube (11) or draw back into the tube (11) depending on whether or not the brake pedal (100) is stepped. The circuit board (124) has multiple pairs of metal contacts (121A, 122A, 123A) (121B, 122B, 123B) formed on its opposite surfaces.

These metal contacts (121A, 122A, 123A) (121B, 122B, 123B) are connected to a voltage switching circuit, which will be discussed later.

A spring used as the resilient element (13) in this embodiment is mounted in the hollow tube (11) and abuts between the circuit board (124) and the stopper (15). With the resilient force of the spring, the shaft (120) can be push out of the tube (11).

The two resilient contacts (14) are mounted on the stopper (15) to be contacted with the metal contacts (121A, 122A, 123A) (121B, 122B, 123B) on the circuit board (124).

If the driver does not step on the brake pedal (100), the shaft (120) of the actuator assembly (12) stays in the hollow tube (11) because the brake pedal (100) provides pressure against the shaft (120). Since the two resilient contacts (14) do not touch any metal contacts (121A, 122A, 123A)(121B, 122B, 123B), the detecting module (10) does not output any voltagesignal.

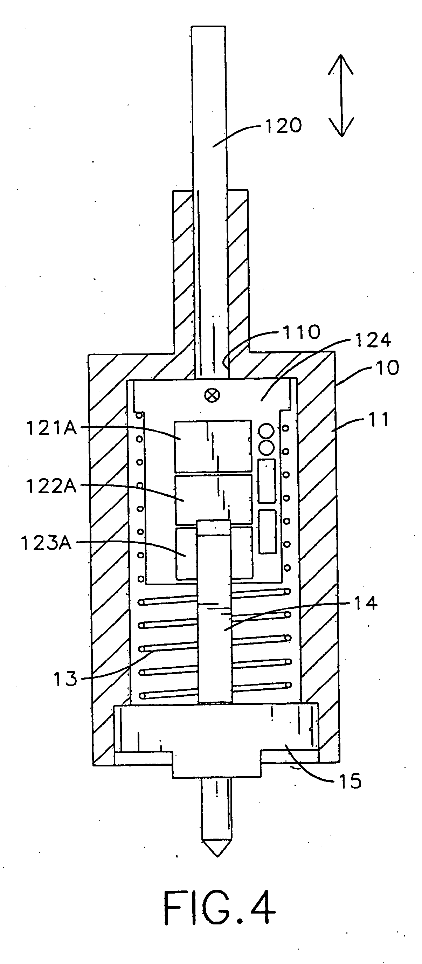

With reference to Fig. 4, when the brake pedal (100) is pressed, the shaft (12) is gradually drew out from the hollow tube (11) as the stepping force on the brake pedal (100) increases. As the shaft (120) moves, the two resilient contacts (14) sequentially touch the metal contacts (121A, 121B) (122A, 122B) (123A, 123B) to produce and output different voltage signals.

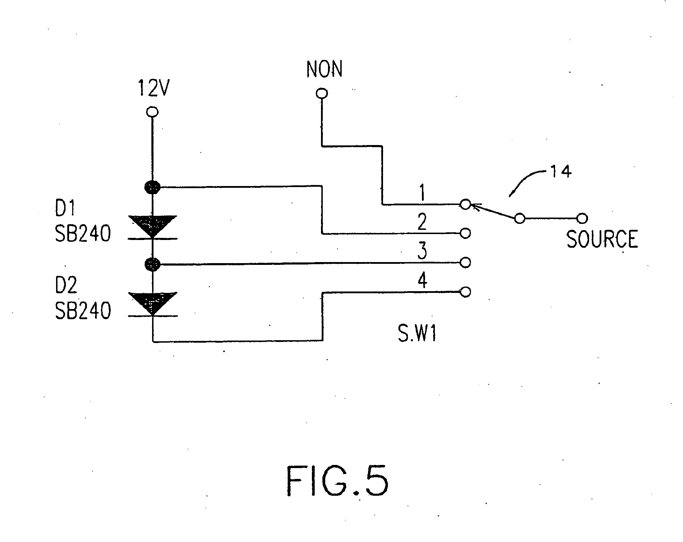

With reference to Fig. 5 it is shown that the two resilient contacts (14) touch different pairs of the metal contacts (121A, 121B)(122A, 122B) (123A, 123B) to produce voltage signals of different levels which can be represented by the equivalent circuit.

Two diodes (D1, D2) are connected in series to form a three-path voltage switching circuit. A voltage (12V) supplied from a battery in the vehicle is connected to the anode of the first diode (D 1) and a second terminal, wherein the second terminal is regarded as the first set of the metal contacts (121A, 121B). The node between the first diode (D1) and the second diode (D2) is used as a third terminal, wherein the third terminal is regarded as the second set of the metal contacts (122A,122B). The cathode of the second diode is used as a fourth terminal that is regarded as the third pair of metal contacts (123A, 123B). When the brake pedal (100) is not stepped, the actuator assembly (12) does not produce any voltage signal so there is no output signal at the output terminal, denoted with "SOURCE".

First, when the brake pedal (100) is slightly stepped, the two resilient contacts (14) respectively touch the first set of metal contacts (121A, 121B), as a result, a voltage signal of 12 volts is directly output from the output terminal (SOURCE).

Secondarily, when the resilient contacts (14) subsequently touch the second set of the metal contacts (122A, 122B), the voltage is output to the brake light through the first diode (D1). The voltage value at the output terminal (SOURCE) is about 11.3 volts.

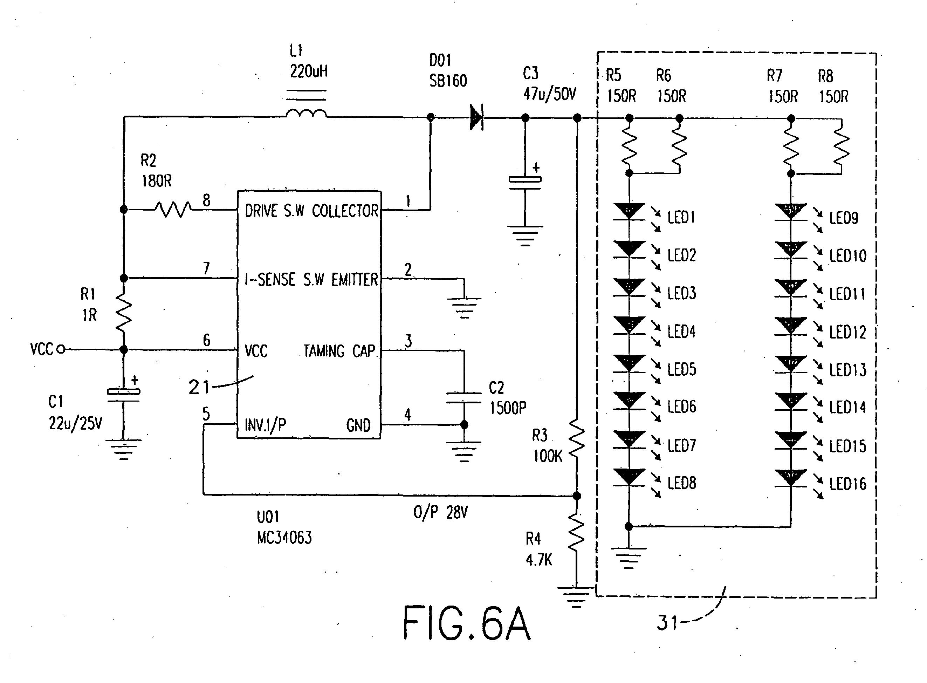

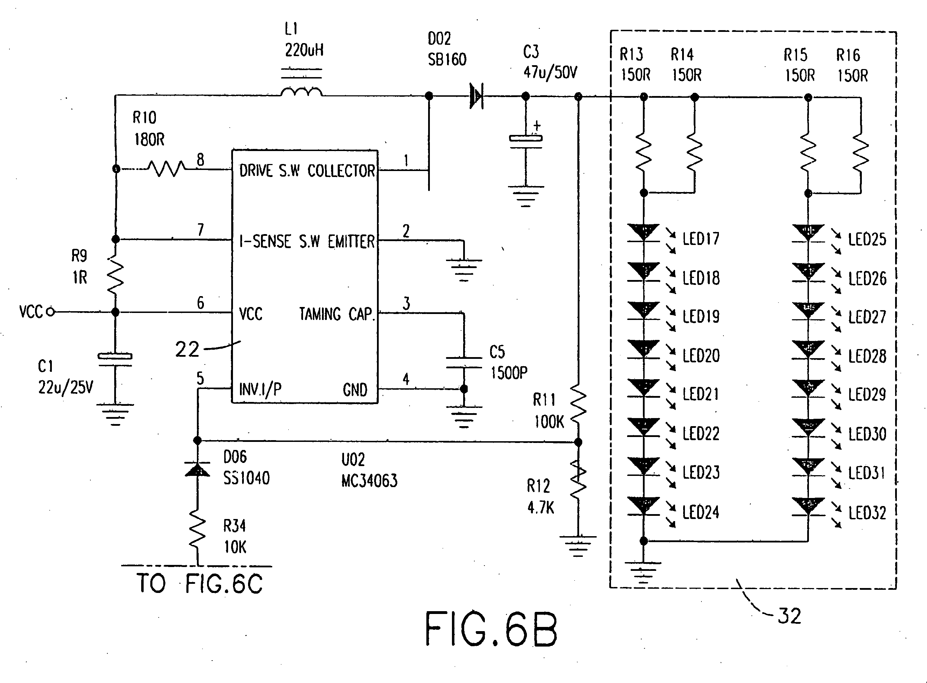

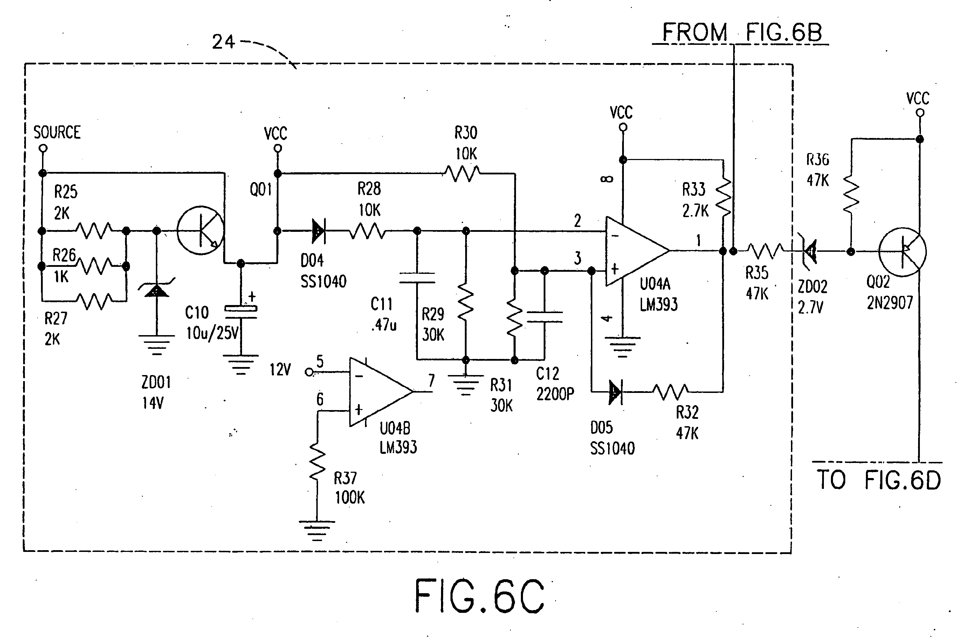

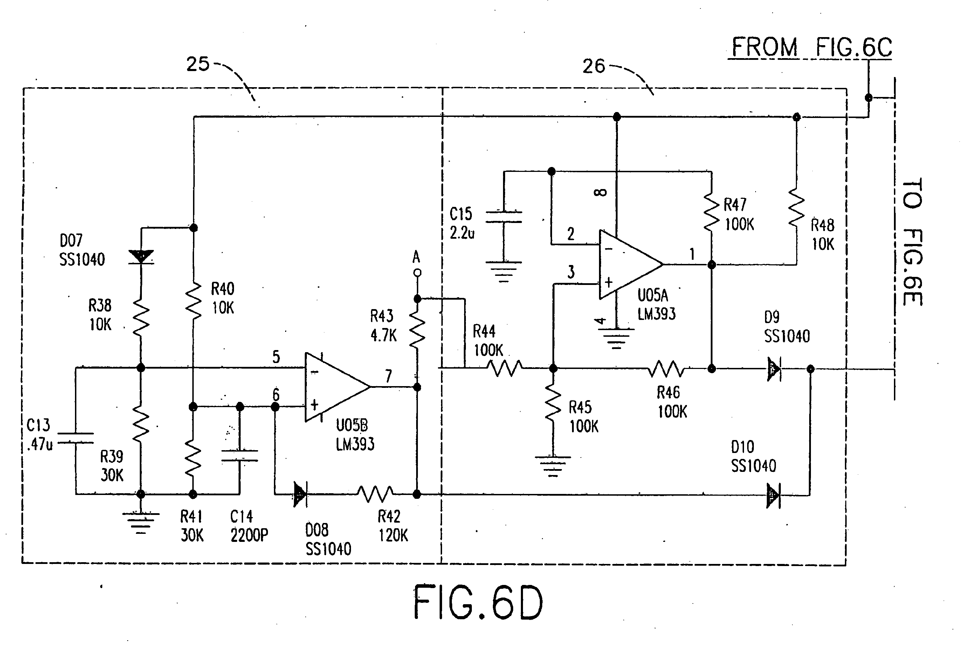

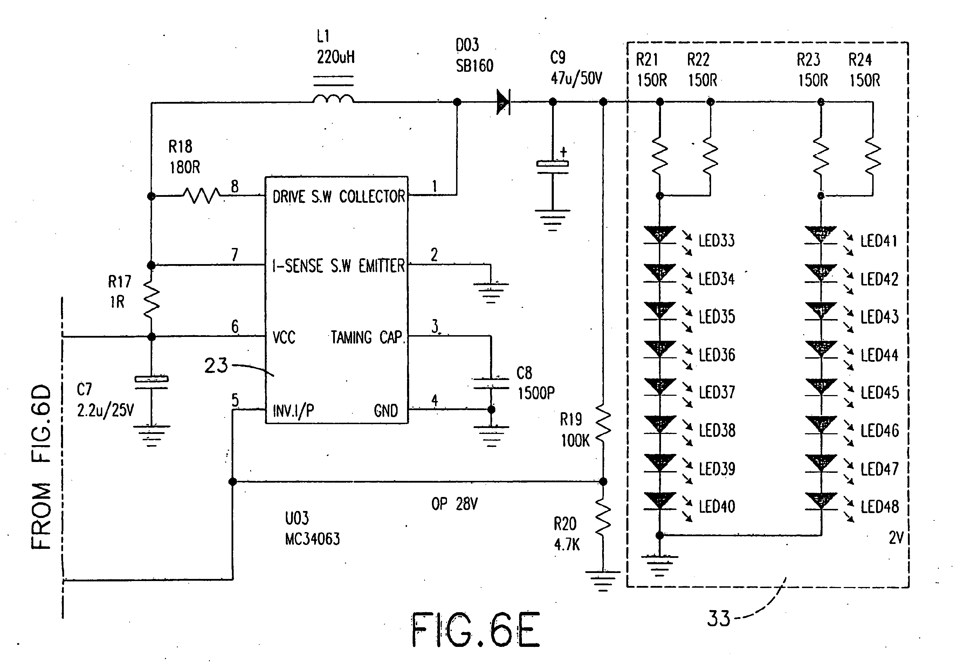

Finally, if the resilient contacts (14) tough the third set of the metal contacts (123A, 123B), the output voltage through the two diodes (D1, D2) is about 10.6 volts. Based on the different voltage signals, the driving module accordingly activates the respective light modules. The output terminal "SOURCE" is connected to the circuit of Fig. 6.

With reference to Fig. 6, the driving module comprises three voltage boosting circuits (21, 22, 23), a first comparing circuit (24) and a second comparing circuit (25).

Each of the voltage boosting circuit (21, 22, 23) has a power input terminal (pin 6), an output terminal (pin 1) and a trigger terminal (pin 5). The power input terminals connect to the detecting module (10) to receive an operating voltage (VCC) from a Darlington driving circuit in the first comparing circuit (24). The output terminals of the voltage boosting circuit (21, 22, 23) are respectively connected to three light modules (31, 32, 33). Each light module (31, 32, 33) comprises at least one light string formed by multiple light emitting diodes connected in series.

The input terminal of the Darlington driving circuit is connected to the output terminal (SOURCE) of the detecting module (10). The output terminal of the Darlington driving circuit is used as an operating voltage (VCC) output terminal. The first comparing circuit (24) provides an output terminal to connect to the trigger terminal of the second voltage boosting circuit (22). In the first comparing circuit (24), a comparator (U04A) has two input terminals respectively connected to two RC circuits, which are formed by resistors (R29, R31) and capacitors (C11, C12). The capacitance of the two capacitors are different, wherein capacitor (C12) is much smaller than capacitor (C11). The two RC circuits all connect to the operating voltage (VCC). Because the two RC circuits have different RC constants, the charge and discharge speeds of the two RC circuits are not identical. Accordingly, the output voltage level of the comparator (U04A) is determined by the voltage levels at its two input terminals. The output signal of the comparator (U04A) is used to determine whether the voltage boosting circuit (22) should be driven to start the second light module (32).

The second comparing circuit (25) has an input terminal connected to the operating voltage (VCC) output from the detecting module through a PNP transistor (Q02). The base of the PNP transistor (Q02) is connected to the output terminal of the first comparator (U04A), and the collector is connected to the power input terminal of the voltage boosting circuit (23). The emitter of the PNP transistor (Q02) connects to the operating voltage (VCC). The PNP transistor (Q02) determines whether the input terminal of the second comparing circuit (25) and the power input terminal of the voltage boosting circuit (23) should connect to the operating voltage (VCC). The output voltage level of the first comparing circuit (24) determines whether the transistor (Q02) should be turned on. If the output voltage is at a high level, the second voltage boosting circuit (22) will not be triggered, the second light module (32) does not operate and the transistor (Q02) is turned off.

When the first comparing circuit (24) outputs a low voltage level signal, the second voltage boosting circuit (22) is triggered to drive the second light module (32). The transistor (Q02) is turned on and the operating voltage (VCC) is output to the input terminal of the second comparing circuit (25) and the power input terminal of the voltage boosting circuit (23). Depending on the output signal of the second comparing circuit (25), the third voltage boosting circuit (23) determines whether the third light module (33) should be turned on.

The second comparing circuit (25) includes a comparator (U05B) and two RC circuits connected to two input terminals of the comparator (U05B). The two RC circuits are composed of resistors (R39, R41) and capacitors (C13, C14) with different capacitance. The different charge and discharge constants of the two RC circuits determine the output status of the comparator (U05B). The comparator (U05B) further controls whether the third voltage boosting circuit (23) should be driven to turn on the third light module (33). To have distinct lighting effects between the first light module (31) and the second light module (32), an oscillating circuit (26) is connected between the second comparing circuit (25) and the third voltage boosting circuit (23) to control the third light module (33) operated in a flash mode.

When the driver slightly steps on the brake pedal (100), the detecting module (10) generates a first voltage signal of 12 volts as discussed above. The voltage signal of 12 volts is input to the Darling driving circuit from the terminal (SOURCE). The operating voltage (VCC) hereinafter is deemed as the same as the voltage signal at terminal (SOURCE) because the voltage drop of the transistor (Q01) in the Darlington driving circuit can be omitted. The voltage (VCC) is supplied to the first voltage boosting circuit (21) to drive the first light module (31). Because the positive input terminal has a higher input voltage that the negative input terminal, the first comparing circuit (24) output a high-level voltage signal. The second voltage boosting circuit (22) will not be triggered. Since the second and third voltage boosting circuits (22, 23) are not triggered, the second and third light module (32)(33) accordingly will not be turned on.

When the driver presses the brake pedal (100) deeper, the output voltage from the detecting module (10) becomes 11.3 volts. Because the capacitor (C12) has the smaller capacitance than (C11), the voltage level at the positive input terminal of the comparator (U04A) drops quicker than the negative input terminal. Therefore, the comparator (U04A) outputs a low-level voltage signal. The second voltage boosting circuit (22) is triggered to turn on the second light module (32). The transistor (Q02) also conducts to allow the operating voltage (VCC) to be transmitted to the input terminal of the second comparing circuit (25) and the power input terminal of the third voltage boosting circuit (23).

Finally, when the driver further increases the pressure and completely steps on the brake pedal (100), the detecting module (10) outputs a voltage signal of 10.6 volts as discussed above. Similar to the first comparator (U04A), the voltage change at the input terminals of the second comparartor (U05B) results in a low level signal to trigger the third voltage boosting circuit (33) to drive the third light module (33).

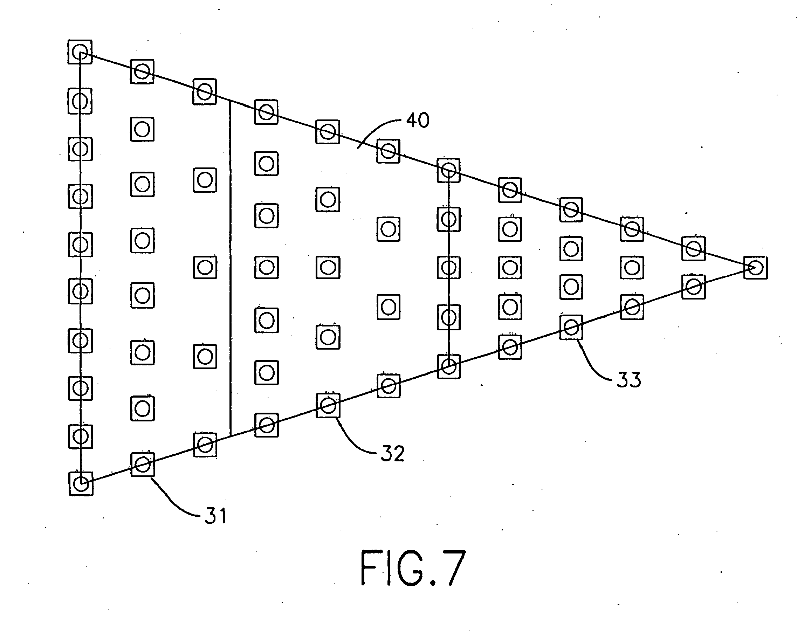

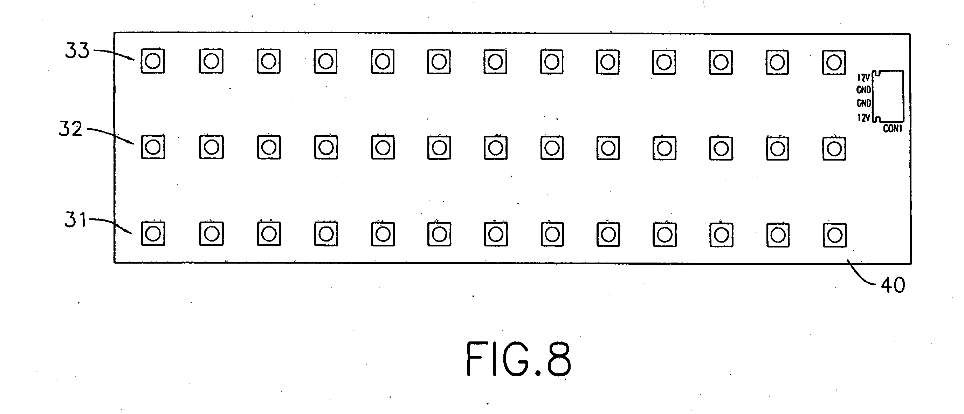

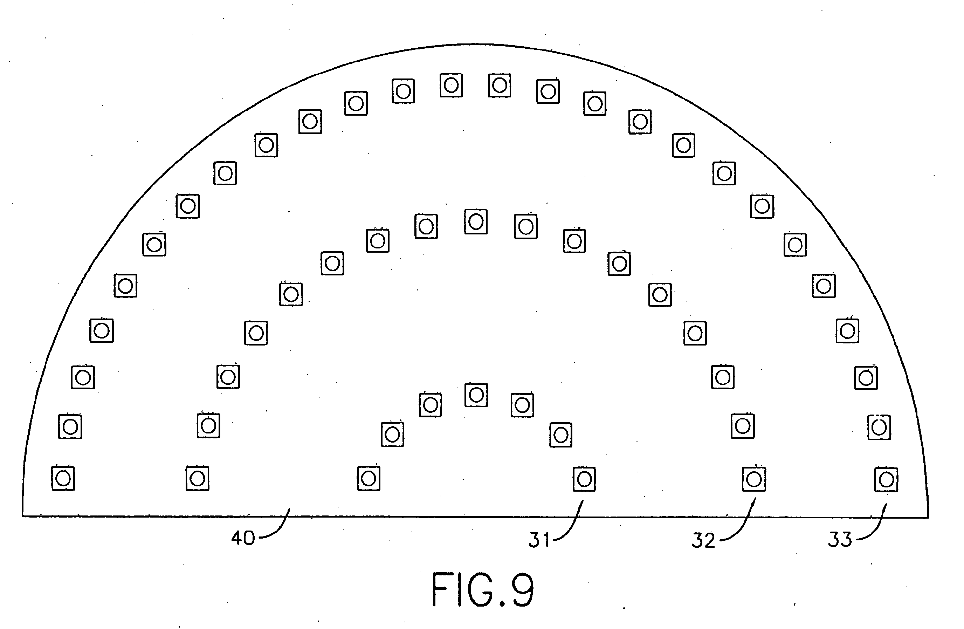

With reference to Figs. 7 to 9, to produce distinct lighting effects, the three light modules (31, 32, 33) can be different in their colors or arrangements. For example, the light modules (31, 32, 33) can be designed to produce white, yellow and red colors respectively and mounted on a display board (40) to form parallels, a triangular or a fan-shaped configuration. Because the detecting module (10) produces the detected signals, i.e. the voltage signals, based on the voltage variation, original circuits in the vehicle do not need changed.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the scope of the invention as defined by the appended claims.

## Claims

1. A segmented brake light for a vehicle having a detecting module (10) detecting pressure on a brake pedal (100) of the vehicle to produce a detecting signal based on the detected pressure, a driving module producing a driving signal according to the detecting signal, and multiple light modules (31, 32, 33) selectively activated according to the driving signal, the driving module comprising:
multiple voltage boosting circuits (21, 22, 23), each of the voltage boosting circuit (21, 22, 23) having a power input terminal, an output terminal and a trigger terminal; wherein the multiple light modules (31, 32, 33) are respectively connected to the output terminals of the voltage boosting circuits (21, 22, 23) of the driving module;
a first comparing circuit (24) having an input terminal connected to the detecting module (10) and an output terminal connected to the trigger terminal of one of the voltage boosting circuits (22);
**characterized in that** the driving module further comprises:
an electronic switch connected to an operating voltage and the power input terminal of another one of the voltage boosting circuits (23);
a second comparing circuit (25) having an input terminal connected to the output terminal of the first comparing circuit (24) through the electronic switch.

2. The segmented brake light as claimed in claim 1, both of the first comparing circuit (24) and the second comparing circuit (25) having a comparator with two input terminals that respectively connect to two RC circuits, wherein the RC circuits have different capacitance and further connect to an operating voltage.

3. The segmented brake light as claimed in claim 1, wherein the electronic switch is a PNP transistor having a base connected to the output terminal of the first comparing circuit (24) and a collector connected to the power input terminal of one of the voltage boosting circuits (23) and the input terminal of the second comparing circuit (25).

4. The segmented brake light as claimed in claim 1, further comprising an oscillating circuit (26) being connected between the second comparing circuit (25) and one of the boosting voltage circuits (23), wherein the oscillating circuit (26) controls the light module (33) that is driven by the voltage boosting circuit (23) to flash.

5. The segmented brake light is claimed in claim 1, wherein the input terminal of one of the voltage boosting circuits (21) is directly connected to the output terminal of the detecting module to control the first one of the light modules (31).

6. The segmented brake light as claimed in any of the claims 1 to 5, wherein each of the multiple light modules (31, 32, 33) comprises at least one light string composed of multiple light emitting diodes connected in series.

7. The segmented brake light as claimed in claim 6, wherein the multiple light modules (31, 32, 33) are mounted on a display board (40) to form different shapes.

## Patentansprüche

1. Unterteilte Bremsleuchte für ein Fahrzeug, die ein Detektionsmodul (10) aufweist, das Druck auf ein Bremspedal (100) des Fahrzeugs erfasst, um basierend auf dem erfassten Druck ein Detektionssignal zu erzeugen, ein Antriebsmodul, das ein Antriebssignal gemäß dem Detektionssignal erzeugt, und mehrere Leuchtmodule (31, 32, 33), die selektiv gemäß dem Antriebssignal aktiviert werden, wobei das Antriebsmodul umfasst:
mehrere Spannungserhöhungsschaltungen (21, 22, 23), wobei jede der Spannungserhöhungsschaltungen (21, 22, 23) einen Leistungseingangsanschluss, einen Ausgangsanschluss und einen Auslöseanschluss aufweist; wobei die mehreren Leuchtmodule (31, 32, 33) jeweils an die Ausgangsanschlüsse der Spannungserhöhungsschaltungen (21, 22, 23) des Antriebsmoduls angeschlossen sind;
eine erste Vergleichsschaltung (24), die einen Eingangsanschluss aufweist, der an das Detektionsmodul (10) angeschlossen ist, und einen Ausgangsanschluss, der an den Auslöseanschluss einer der Spannungserhöhungsschaltungen (22) angeschlossen ist;
**dadurch gekennzeichnet, dass** das Antriebsmodul überdies umfasst:
einen elektronischen Schalter, der an eine Betriebsspannung und den Leistungseingangsanschluss einer anderen der Spannungserhöhungsschaltungen (23) angeschlossen ist;
eine zweite Vergleichsschaltung (25), die einen Eingangsanschluss aufweist, der an den Ausgangsanschluss der ersten Vergleichsschaltung (24) durch den elektronischen Schalter angeschlossen ist.

2. Unterteilte Bremsleuchte nach Anspruch 1, wobei beide, die erste Vergleichsschaltung (24) und die zweite Vergleichsschaltung (25), einen Komparator mit zwei Eingangsanschlüssen aufweist, die jeweils an zwei RC-Schaltungen angeschlossen sind, wobei die RC-Schaltungen eine unterschiedliche Kapazität aufweisen und überdies an eine Betriebsspannung angeschlossen sind.

3. Unterteilte Bremsleuchte nach Anspruch 1, wobei der elektronische Schalter ein PNP-Transistor ist, dessen Basis an den Ausgangsanschluss der ersten Vergleichsschaltung (24) angeschlossen ist, und dessen Kollektor an den Leistungseingangsanschluss einer der Spannungserhöhungsschaltungen (23) und den Eingangsanschluss der zweiten Vergleichsschaltung (25) angeschlossen ist.

4. Unterteilte Bremsleuchte nach Anspruch 1, überdies umfassend einen Schwingkreis (26), der zwischen der zweiten Vergleichsschaltung (25) und einer der Spannungserhöhungsschaltung (23) angeschlossen ist, wobei der Schwingkreis (26) das Leuchtmodul (33) steuert, das von der Spannungserhöhungsschaltung (23) angetrieben wird, zu blinken.

5. Unterteilte Bremsleuchte nach Anspruch 1, wobei der Eingangsanschluss einer der Spannungserhöhungsschaltungen (21) direkt an den Ausgangsanschluss des Detektionsmoduls angeschlossen ist, um das erste der Leuchtmodule (31) zu steuern.

6. Unterteilte Bremsleuchte nach einem beliebigen der Ansprüche 1 bis 5, wobei jedes der mehreren Leuchtmodule (31, 32, 33) mindestens einen Leuchtstrang umfasst, der mehrere Leuchtdioden umfasst, die in Reihe geschaltet sind.

7. Unterteilte Bremsleuchte nach Anspruch 6, wobei die mehreren Leuchtmodule (31, 32, 33) auf einer Anzeigetafel (40) montiert sind, um unterschiedliche Formen zu bilden.

## Revendications

1. Feu de freinage segmenté pour un véhicule présentant un module de détection (10) détectant la pression sur une pédale de frein (100) du véhicule pour produire un signal de détection basé sur la pression détectée, un module d'entraînement produisant un signal d'entraînement selon le signal de détection, et plusieurs modules lumineux (31, 32, 33) activés sélectivement selon le signal d'entraînement, le module d'entraînement comprenant :
plusieurs circuits d'amplification de tension (21, 22, 23), chacun des circuits d'amplification de tension (21, 22, 23) présentant une borne d'entrée de courant, une borne de sortie et une borne de déclenchement ; dans lequel les plusieurs modules lumineux (31, 32, 33) sont respectivement connectés aux bornes de sortie des circuits d'amplification de tension (21, 22, 23) du module d'entraînement ;
un premier circuit de comparaison (24) présentant une borne d'entrée connectée au module de détection (10) et une borne de sortie connectée à la borne de déclenchement de l'un des circuits d'amplification de tension (22) ;
**caractérisé en ce que** le module d'entraînement comprend en outre :
un interrupteur électronique connecté à une tension de service et à la borne d'entrée de courant d'un autre des circuits d'amplification de tension (23) ;
un second circuit de comparaison (25) présentant une borne d'entrée connectée à la borne de sortie du premier circuit de comparaison (24) à travers l'interrupteur électronique.

2. Feu de freinage segmenté selon la revendication 1, le premier circuit de comparaison (24) et le second circuit de comparaison (25) présentant tous deux un comparateur avec deux bornes d'entrées qui sont connectées respectivement à deux circuits RC, dans lequel les circuits RC présentent différentes capacitances et sont connectés en outre à une tension de service.

3. Feu de freinage segmenté selon la revendication 1, dans lequel l'interrupteur électronique est un transistor PNP présentant une base connectée à la borne de sortie du premier circuit de comparaison (24) et un collecteur connecté à la borne d'entrée de courant de l'un des circuits d'amplification de tension (23) et la borne d'entrée du second circuit de comparaison (25).

4. Feu de freinage segmenté selon la revendication 1, comprenant en outre un circuit oscillant (26) qui est connecté entre le second circuit de comparaison (25) et l'un des circuits d'amplification de tension (23), dans lequel le circuit oscillant (26) commande le module lumineux (33) qui est entraîné par le circuit d'amplification de tension (23) pour clignoter.

5. Feu de freinage segmenté selon la revendication 1, dans lequel la borne d'entrée de l'un des circuits d'amplification de tension (21) est directement connectée à la borne de sortie du module de détection pour commander le premier des modules lumineux (31).

6. Feu de freinage segmenté selon l'une quelconque des revendications 1 à 5, dans lequel chacun des plusieurs modules lumineux (31, 32, 33) comprend au moins un rang lumineux composé de plusieurs diodes électroluminescentes connectées en série.

7. Feu de freinage segmenté selon la revendication 6, dans lequel les plusieurs modules lumineux (31, 32, 33) sont montés sur un tableau d'affichage (40) pour former différentes formes.
